# EUROPEAN PATENT APPLICATION

(11) **EP 2 429 120 A1**
(43) Date of publication of application: **14.03.2012**
(21) Application number: 10771996.5
(22) Date of filing: 23.04.2010
(51) Int. Cl.: H04L 12/24, H04L 12/26

(54) **DISTRIBUTED NETWORK MANAGEMENT SYSTEM, NETWORK ELEMENT MANAGEMENT SERVER, AND DATA CONFIGURATION MANAGEMENT METHOD**

(30) Priority: 07.05.2009 CN 200910137687
(71) Applicant: ZTE Corporation, Shenzhen, Guangdong 518057 (CN)
(72) Inventor: SHI, Shushan, Shenzhen Guangdong 518057 (CN); MA, Xiaojun, Shenzhen Guangdong 518057 (CN); GE, Jing, Shenzhen Guangdong 518057 (CN)
(74) Representative: Anderson, Angela Mary
(86) International application number: PCT/CN2010/072126
(87) International publication number: WO 2010/127593

(57) **Abstract**

A distributed network management system is provided, comprising: a centralized network element management server and one or more regional network element management servers. The centralized network element management server is configured to synchronize service application data stored in the centralized network element management server to each of the regional network element management servers. Each regional network element management servers is configured to: store network element physical data of all network element equipments in its service region; store the service application data synchronized by the centralized network element management server; and synchronize the network element physical data and the service application data to the corresponding network element equipment. A corresponding network element management server and a corresponding data configuration management method are also provided. The service application data are independent from each region and unified to the centralized network management layer to be managed, realizing maintenance and management of the cross-regional service application data and improving the capability of the network management system supporting service applications.

## Description

### Technical Field

The present invention relates to the field of communication network management technology, and more especially, to a distributed network management system, a network element management server and a data configuration management method.

### Background of the Related Art

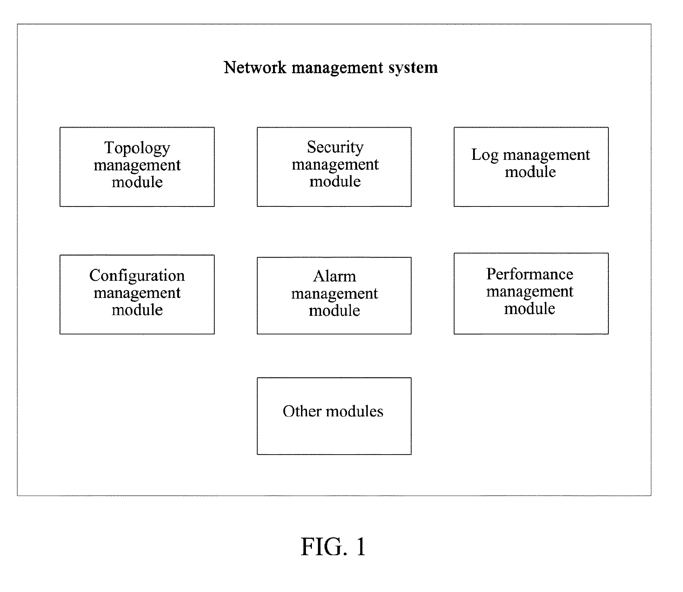

Network management system is a very important part in a communication network. As shown in FIG. 1, the network management system comprises a topology management module, a configuration management module, a performance management module, an alarm management module, a security management module and a log management module. Users maintain and manage network element equipments via the network management system.

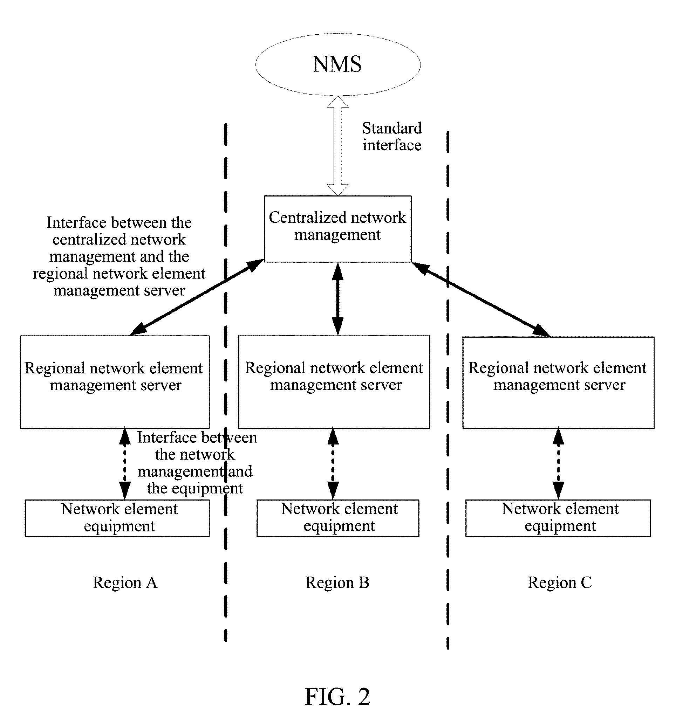

As shown in FIG. 2, the network management system generally used by the telecommunication operators is: implementing the centralized examine and the centralized collection of operating data of the network element equipments in all regional network element management servers by a centralized network element management server (centralized network management for short), and focusing on collection of centralized performances and alarm data; and each regional network element management server being responsible for configuring and maintaining the operating data of the network element equipments in the local region and locally storing the data in the database of the regional network element management server, wherein each of the regional network element management servers is physically independent, so are the data.

With the development of the telecommunication technology and service, it needs to develop the same service in a plurality of equipments in different regions. Using the conventional data configuration management method, each of the regional network element management servers needs to configure the network element physical data related to the network element equipment and the same service application data. That mode of repeatedly configuring and maintaining the same service application data, however, increases the possibility of inconsistency of the service application data in different regions and also the data maintenance cost.

### Content of the Invention

The present invention provides a distributed network management system, a network element management server and a data configuration management method to overcome the problem that it needs to repeatedly configure the service data resource when developing the same service in different regions in the conventional network management system.

In order to solve the above-mentioned problem, the present invention provides a distributed network management system, comprising: a centralized network element management server, and one or more regional network element management servers,
said centralized network element management server is configured to: synchronize service application data stored in said centralized network element management server to each of the regional network element management servers; and said regional network element management server is configured to:
store network element physical data of all network element equipments in a service region of the regional network element management server;
store the service application data synchronized to the regional network element management server by said centralized network element management server; and
synchronize the network element physical data and the service application data to the corresponding network element equipment.

The above-mentioned system can also have the following feature:
said centralized network element management server is provided with a data synchronization module; and
said data synchronization module is configured to: synchronize the service application data stored in said centralized network element management server to said regional network element management server.

The above-mentioned system can also have the following feature:
said regional network element management server is provided with a data synchronization module; and
the data synchronization module of said regional network element management server is configured to: synchronize the network element physical data and the service application data stored in said regional network element management server to the corresponding network element equipment.

The above-mentioned system can also have the following feature:
said centralized network element management server is further configured to: maintain the service application data stored in said centralized network element management server.

In order to solve the above-mentioned problem, the present invention also provides a data configuration management method, comprising:
a centralized network element management server synchronizing stored service application data to each of regional network element management servers; and
said regional network element management server storing network element physical data of all network element equipments in a service region of the regional network element management server; and storing said service application data after receiving the service application data synchronized by said centralized network element management server.

The above-mentioned method can also have the following feature:
when the service application data in said centralized network element management server change, said centralized network element management server synchronizes the changed service application data to each regional network element management server.

The above-mentioned method can also have the following feature:
said regional network element management server synchronizes and loads said service application data and said network element physical data simultaneously to the corresponding network element equipment.

The above-mentioned method can also have the following feature:
when the service application data in said regional network element management server change, said regional network element management server synchronizes the changed service application data to the related network element equipments within the service range of the regional network element management server.

The present invention also provides a centralized network element management server, and said centralized network element management server is configured to: synchronize service application data stored in said centralized network element management server to each of regional network element management servers.

Said centralized network element management server is provided with a data synchronization module; and
said data synchronization module is configured to: synchronize the service application data stored in said centralized network element management server to the corresponding regional network element management server.

Said centralized network element management server is further configured to: maintain the service application data stored in said centralized network element management server.

The present invention also provides a regional network element management server, and said regional network element management server is configured to:
store network element physical data of all network element equipments in a service region of the regional network element management server;
store service application data synchronized by a centralized network element management server; and
synchronize the network element physical data and the service application data to the corresponding network element equipment.

Said regional network element management server is provided with a data synchronization module; and
said data synchronization module is configured to: synchronize the network element physical data and the service application data stored in said regional network element management server to the corresponding network element equipment.

Compared with the related art, the present invention implements the centralized configuration management of the service application data and the independent configuration management of the network element physical data in each region, on the premise of being compatible with the architecture and functions of the conventional network management system, that is, the present invention realizes to separate the service application data from each region and unify them to the centralized network management layer to be managed, so as to implement the maintenance and management for the cross-regional service application data and improve the support capability of the network management system to the service applications. Moreover, the service data in different regions can be consistent, saving the manpower cost in operation and maintenance.

### Brief Description of Drawings

FIG. 1 is a composition diagram of a network management system in the related art;
FIG. 2 is a network architecture diagram of a conventional network management system in the related art;
FIG. 3 is a network architecture diagram of a distributed network management system in accordance with an embodiment of the present invention; and
FIG. 4 is a model diagram of a configuration management system of a distributed network management system in accordance with an embodiment of the present invention.

### Preferred Embodiments of the Present Invention

The technical scheme of the present invention will be described in more detail with reference to the accompanying drawings and embodiments.

The basic idea of the present invention is: configuring, managing and storing service application data in a centralized network management layer, and configuring, managing and storing network element physical data in each regional network element management server, so as to implement a distributed management for data resource in a service application layer and data resource in an equipment layer.

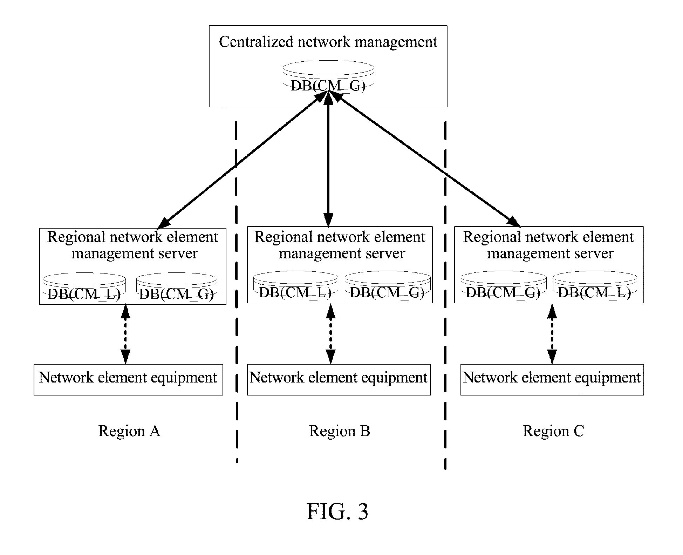

As shown in FIG. 3, a network architecture of the distributed network management system in the present invention comprises: a centralized network management, and one or more regional network element management servers.

The centralized network management is adapted to achieve centralized and unified management for all regional network element management servers, wherein the centralized and unified management mainly comprises functions of centralized configuration management, centralized performance management, centralized alarm management and centralized signaling track, etc. The present invention significantly illustrates the centralized configuration management, which is mainly represented on how to perform the unified and centralized management to the service application data needed by each region, and to uniformly store the service application data into a DB (CM_G) database of the centralized network management. The centralized network management is further adapted to maintain the saved service application data, such as add, delete or modify the service application data.

The regional network element management server is operated on a single board or a server, and is responsible for configuring and managing network element physical data of the network element equipments in its service region, wherein the network element physical data can be stored in its DB (CM_L) database; the regional network element management server is further adapted to store the service application data needed by the network element equipments in its service region to a DB (CM_G) database of that regional network element management server, wherein the service application data is synchronized by the centralized network management to the regional network element management server and the regional network element management server can only search but not modify the service application data; in addition, each regional network element management server can further load the service application data and the network element physical data to the corresponding network element equipment by data synchronization so as to achieve service development.

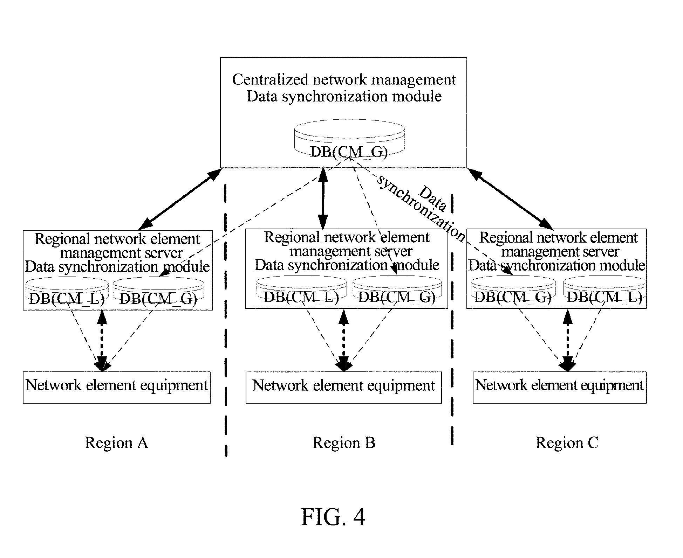

The centralized network management and all regional network element management servers can be provided with data synchronization modules, as shown in FIG. 4. The data synchronization module of the centralized network management is adapted to synchronize the service application data maintained by the centralized network management to each regional network element management server; and the data synchronization module of each regional network element management server is adapted to synchronize the service application data and the network element physical data to the corresponding network element equipment, so as to provide necessary data resource for the network equipment to develop services.

The distributed network management system in the present invention is especially suitable for a local networking with large capacity.

A home location register (HLR) network management platform is taken for an example in the following to illustrate the procedure of the data configuration management in the network management system in the present invention, wherein the user configures and maintains the service application data in all regions by the centralized network management to implement the centralized management for the service application data in all regions; and the regional network element management servers in regions A, B and C, respectively, configure and maintain the network element physical data related to the network element equipments in their own service regions, in which the data of each region is independent and no data is shared. The procedure comprises:
A) the user synchronizes the service application data in the centralized network management to the DB (CM_G) databases of the regional network element management servers in the regions A, B and C by the data synchronization module of the centralized network management, in order to guarantee the consistency of the service application data in the DB (CM_G) databases of the regional network element management servers in the regions A, B and C; and the data synchronization procedure can also occur while the service application data in the centralized network management change; and
B) when the service application data stored in the home regional network element management server change, the regional network element management server synchronizes and loads the changed service application data to the corresponding network element equipment, and of course, the network element physical data corresponding to that network element equipment can also be synchronized to that network element equipment simultaneously so as to provide the necessary data resource for service development; and
when the network element physical data stored in the home regional network element management server change, the regional network element management server synchronizes and loads the changed network element physical data to the corresponding network element equipment, and of course, the service application data corresponding to that network element equipment can also be synchronized to that network element equipment simultaneously.

The present invention also provides a centralized network element management server, and the centralized network element management server is configured to: synchronize the service application data stored in that centralized network element management server to each of the regional network element management servers.

The centralized network element management server is provided with a data synchronization module; and
the data synchronization module is configured to: synchronize the service application data stored in that centralized network element management server to the corresponding regional network element management server.

The centralized network element management server is also configured to: maintain the service application data stored in the centralized network element management server.

The present invention also provides a regional network element management server, and the regional network element management server is configured to:
store the network element physical data of all network element equipments in the service region of the regional network element management server;
store the service application data synchronized by the centralized network element management server; and
synchronize the network element physical data and the service application data to the corresponding network element equipment.

The regional network element management server is provided with a data synchronization module; and
the data synchronization module is configured to: synchronize the service application data and the network element physical data stored in the regional network element management server to the corresponding network element equipment.

Of course, the present invention may have a variety of other embodiments. It will be obvious to those skilled in the art that many modifications and variations of the present invention can be made according to the present invention without departing from the spirit and essence of the present invention, and all these types of modifications and variations should belong to the scope of the appending claims of the present invention.

### Industrial Applicability

The present invention implements the centralized configuration management of the service application data and the independent configuration management of the network element physical data in each region, on the premise of being compatible with the architecture and functions of the conventional network management system, that is, the present invention realizes to separate the service application data from each region and unify them to the centralized network management layer to be managed, so as to implement the maintenance and management for the cross-regional service application data and improve the support capability of the network management system to the service applications. Moreover, the service data in different regions can be consistent, saving the manpower cost in operation and maintenance.

## Claims

1. A distributed network management system, comprising: a centralized network element management server, and one or more regional network element management servers,
said centralized network element management server is configured to: synchronize service application data stored in said centralized network element management server to each of the regional network element management servers; and
said regional network element management server is configured to:
store network element physical data of all network element equipments in a service region of the regional network element management server;
store the service application data synchronized to the regional network element management server by said centralized network element management server; and
synchronize the network element physical data and the service application data to the corresponding network element equipment.

2. The system of claim 1, wherein,
said centralized network element management server is provided with a data synchronization module; and
said data synchronization module is configured to: synchronize the service application data stored in said centralized network element management server to said regional network element management server.

3. The system of claim 1 or 2, wherein,
said regional network element management server is provided with a data synchronization module; and
said data synchronization module of said regional network element management server is configured to: synchronize the network element physical data and the service application data stored in said regional network element management server to the corresponding network element equipment.

4. The system of claim 1, wherein, said centralized network element management server is further configured to: maintain the service application data stored in said centralized network element management server.

5. A data configuration management method, comprising:
a centralized network element management server synchronizing stored service application data to each of regional network element management servers; and
said regional network element management server storing network element physical data of all network element equipments in a service region of the regional network element management server; and storing said service application data after receiving the service application data synchronized by said centralized network element management server.

6. The method of claim 5, further comprising:
when the service application data in said centralized network element management server change, said centralized network element management server synchronizing the changed service application data to each regional network element management server.

7. The method of claim 5, further comprising:
said regional network element management server synchronizing and loading said service application data and said network element physical data simultaneously to the corresponding network element equipment.

8. The method of any one of claims 5 to 7, further comprising:
when the service application data in said regional network element management server change, said regional network element management server synchronizing the changed service application data to the related network element equipments within the service range of the regional network element management server.

9. A centralized network element management server, wherein, said centralized network element management server is configured to: synchronize service application data stored in said centralized network element management server to each of regional network element management servers.

10. The centralized network element management server of claim 9, wherein, said centralized network element management server is provided with a data synchronization module; and
said data synchronization module is configured to: synchronize the service application data stored in said centralized network element management server to the corresponding regional network element management server.

11. The centralized network element management server of claim 9, wherein, said centralized network element management server is further configured to: maintain the service application data stored in said centralized network element management server.

12. A regional network element management server, wherein, said regional network element management server is configured to:
store network element physical data of all network element equipments in a service region of the regional network element management server;
store service application data synchronized by a centralized network element management server; and
synchronize the network element physical data and the service application data to the corresponding network element equipment.

13. The regional network element management server of claim 12, wherein, said regional network element management server is provided with a data synchronization module; and
said data synchronization module is configured to: synchronize the network element physical data and the service application data stored in said regional network element management server to the corresponding network element equipment.
